# FASCICULE DE BREVET EUROPEEN

(11) **EP 0 726 926 B1**
(45) Date de publication et mention de la délivrance du brevet: **17.02.1999**
(21) Numéro de dépôt: 94931624.4
(22) Date de dépôt: 24.10.1994
(51) Int. Cl.: C09J 133/06, C09J 127/16, C08L 33/06, B32B 27/30, B29D 23/00

(54) **LIANT D'ADHESION DU PVDF, SON APPLICATION COMME MATERIAU BARRIERE ET MATERIAUX OBTENUS A PARTIR DE CELUI-CI**
HAFTBINDEMITTEL FÜR PVDF, SEINE VERWENDUNG ALS SPERRMATERIAL UND DAMIT ERHALTENE GEGENSTÄNDE
PVDF ADHESION BINDER, USE THEREOF AS A BARRIER MATERIAL, AND RESULTING MATERIALS

(30) Priorité: 25.10.1993 FR 9312702
(43) Date de publication de la demande: 21.08.1996
(73) Titulaire: ELF ATOCHEM S.A., 92091 Paris Cédex 42 (FR)
(72) Inventeur: LOREK, Serge, F-64000 Pau (FR); BUSSI, Philippe, F-27300 Bernay (FR); RENOUARD, Philippe, F-27800 Brionne (FR)
(86) Numéro de dépôt international: FR9401234
(87) Numéro de publication internationale: WO9511947

(56) Documents cités:
- EP-A- 0 216 505
- EP-A- 0 450 994
- FR-A- 2 436 676
- US-A- 4 581 412
- DATABASE WPI Week 8914, Derwent Publications Ltd., London, GB; AN 89-104190 & JP,A,1 051 459 (NIPPON ZEON K.K.) 27 Février 1989
- PATENT ABSTRACTS OF JAPAN vol. 006, no. 231 (C-135) 17 Novembre 1982 & JP,A,57 135 844 (TOYODA GOSEI K.K.) 21 Août 1982

## Description

### DOMAINE TECHNIQUE

La présente invention a pour objet un liant d'adhésion du PVDF et son application comme matériau barrière, ainsi que les matériaux obtenus à partir de celui-ci.

### TECHNIQUE ANTERIEURE

EP 3449 décrit la coextrusion du PVDF avec des polyuréthanes (PU); il n'est pas nécessaire d'utiliser un liant. FR 2 436 676 décrit la coextrusion du PVDF avec le polyméthacrylate de méthyle (PMMA) et un acrylonitrile-butadiène-styrène (ABS), le film de PMMA étant entre les films de PVDF et d'ABS. Un autre exemple a été fait avec le poly(chlorure de vinyle) (PVC) au lieu de l'ABS. EP450994 décrit un perfectionnement de la technique précédente qui utilise comme liant de coextrusion le mélange: (a) 27 à 50 parties de PMMA, et (b) 73 à 50 parties d'un produit constitué lui-même, pour 100 parties, de 35 à 50 parties de PVDF et 65 à 50 parties d'élastomère acrylique ou méthacrylique. Ce perfectionnement augmente l'adhérence du PVDF sur l'ABS.

FR-A-2 457 180 décrit le polyméthacrylate d'alcoyle en tant que liant du PVDF avec des polymères non-compatibles. Parmi les polymères non-compatibles, sont cités l'ABS, le polyuréthane, le polystyrène, le polycarbonate, le PVC, les copolymères styrène/acrylique. Cependant, ce liant, en particulier le PMMA, n'est pas approprié ou présente une adhésion faible vis-à-vis de certains polymères non-compatibles.

JP01-051 459 décrit des compositions thermoplastiques à base de PA, PVDF, et d'élastomère acrylique réticulé dispersé sous forme de nodules dans la matrice PA ou PVDF ; ces compositions sont des alliages de polymères incompatibles (PA et PVDF) au sens de la présente demande.

JP57-135 844 décrit des alliages de trois polymères non miscibles élastomère fluoré/copolymère butadiène-acrylonitrile réticulé/terpolymère éthylène-acrylate-acide qui ne sont pas des liants d'adhésion pour PA et PVDF.

US 4.581.412 décrit des compositions réticulables à température ambiante pour le revêtement de substrats comprenant un copolymère fluoré dérivant de fluorure de vinylidène et d'un monomère vinylique avec des groupements hydroxyles ou époxydes, une résine acrylique et un agent de réticulation en solution dans un solvant.

EP 216 505 concerne des polyimides ainsi que leurs mélanges avec d'autres matériaux thermoplastiques.

Ainsi, il n'existe pas de liant de coextrusion satisfaisant pour coller un film de PVDF sur tous les polymères non-compatibles avec celui-ci, en particulier du polyamide ou sur un produit à base de polyamide.

### EXPOSE DE L'INVENTION

Ainsi la présente invention concerne l'utilisation d'un polymère spécifique, comme liant d'adhésion du PVDF permettant de le faire adhérer aux polymères qui lui sont incompatibles, caractérisé en ce qu'il comprend un polymère A contenant des motifs : 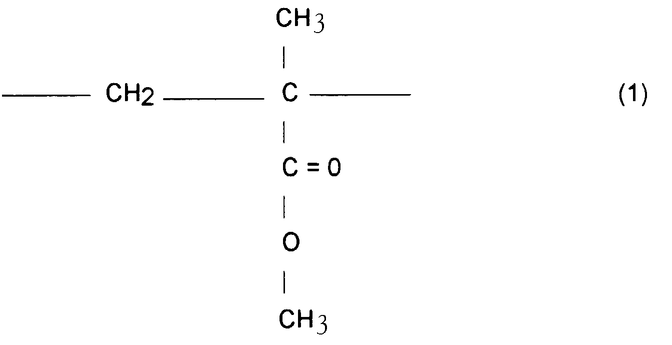 et des motifs : 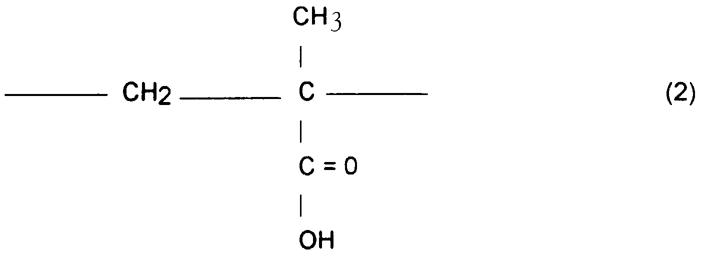 sous forme acide, ou ses dérivés anhydrides ou des mélanges de ceux-ci, et ne contenant pas de motif imide.

Le terme "motifs (2) sous forme acide ou ses dérivés anhydrides ou des mélanges de ceux-ci" couvre notamment les cas suivants : les motifs (2) sont sensiblement sous forme acide ; les motifs (2) sont sensiblement sous forme anhydride, des mélanges de motifs (2) sous forme acide et sous forme anhydride. La formule donnée pour le motif (2) comprend aussi de façon générale les motifs portant une fonctionnalité acide.

Selon un mode de réalisation, le polymère A comprend, en moles, jusqu'à 30% de motif (2), sous forme acide, ou son dérivé anhydride ou leurs mélanges. Avantageusement, le polymère A comprend, en moles, jusqu'à 15% de motif (2), sous forme acide, ou son dérivé anhydride ou leurs mélanges.

Selon un autre mode de réalisation, le polymère A contient principalement le motif (2) sous forme acide.

Le liant est un liant à base de PMMA.

Les polymères A mentionnés ci-avant peuvent être préparés par tout procédé approprié connu dans l'art. On citera par exemple le procédé décrit dans EP-A-216505, qui s'applique par analogie pour les polymères A.

On désigne aux fins de la présente invention par PVDF un homopolymère ou un copolymère possédant au moins 70% en poids de restes de fluorure de vinylidène. Le PVDF peut aussi être mélangé à un autre polymère thermoplastique, à condition qu'au moins 50% en poids de PVDF soit présent dans le mélange. Le terme PVDF couvre aussi les PVDF modifiés, par exemple par des élastomères.

Parmi les polymères incompatibles avec le PVDF, on peut citer par exemple les polyamides. Par polyamide, on entendra les homopolyamides, les copolyamides ou les alliages de polyamides. A titre d'exemples de polyamides (PA), on peut citer les PA-6,6, PA-6, PA-6,12, PA-11 et PA-12 ou leurs alliages. Les alliages de polyamides peuvent être ceux constitués d'une matrice polyamide dans laquelle sont dispersées des particules d'un autre polymère tels que ceux décrits dans le brevet US 4 174 358. Les polyamides peuvent aussi contenir des plastifiants. L'invention fournit donc un liant qui permet de compatibiliser, entre autres, les polyamides avec le PVDF.

Le liant peut contenir d'autres composés que le polymère A, par exemple des additifs ou charges conventionnelles, en des proportions classiques, connus de l'homme de l'art. Le polymère A peut cependant aussi représenter la totalité ou la quasi-totalité du liant.

Le liant peut ainsi en outre contenir des plastifiants, des élastomères, et divers additifs compatibles avec le polymère A. A titre d'exemple, le liant peut être constitué d'au moins 10% en poids de polymère A, le reste étant du PVDF et un modifiant choc. On donne ci-après un exemple d'une telle composition, contenant (en % poids):
- 12 à 20% de polymère A,
- 30 à 60% de PVDF,
- 20 à 40% d'élastomère MBS
le total étant de 100%.

On désigne par MBS des modifiants chocs qui se présentent sous forme de particules ayant un coeur en caoutchouc styrène/butadiène et une enveloppe en acrylique/styrène.

L'invention concerne aussi des mélanges du polymère A avec un additif ou polymère pour abaisser son module d'élasticité ou plastifiant. En effet, le liant constitué du polymère A est trop rigide pour certaines applications, il est utile de le mélanger avec un additif ou un autre polymère pour le rendre moins rigide. On choisit la quantité de cet additif ou polymère selon la rigidité souhaitée. Ainsi, selon un mode de réalisation, le liant est caractérisé en ce qu'il comprend un additif ou polymère modifiant sa rigidité ou plastifiant, compatible avec le polymère A.

Selon un mode de réalisation, le liant comprend du PVDF, modifié ou non, représentant en % en poids du liant, au moins 65%, de préférence au moins 80%. Le PVDF présent représente ainsi de 30 à 99,9995% en poids, de préférence de 65 à 99,98%. Les pourcentages sont calculés par rapport au liant contenant sensiblement totalement le polymère A. Selon ce mode de réalisation, le PVDF agit comme plastifiant du liant.

Le PVDF ajouté au liant peut aussi agir, outre en tant que plastifiant, en tant qu'agent conférant une propriété de barrière.

Ainsi, selon un mode de réalisation, le liant forme barrière aux hydrocarbures.

Selon un autre mode de réalisation, le liant comprend du PVDF, modifié ou non, représentant en % en poids du liant, au moins 65%, de préférence au moins 80%. Le PVDF présent représente ainsi de 65 à 99,9995% en poids, de préférence de 80 à 99,98%. Les pourcentages sont calculés de la même façon que ci-dessus.

Les hydrocarbures, ainsi que ce terme est utilisé dans la présente invention, recouvre tous les hydrocarbures comprenant ou non divers additifs, tels que les alcools.

### POSSIBILITES D'APPLICATION INDUSTRIELLE

L'invention a aussi pour objet les matériaux obtenus à partir d'un liant selon l'invention. Dans ces matériaux, le liant peut être utilisé en tant que liant de coextrusion. Ce matériau à plusieurs couches peut être préparé par les techniques usuelles de coextrusion ou de surmoulage.

Selon un mode de réalisation, le matériau comprend, dans l'ordre, une couche de PVDF, une couche du liant selon l'invention, une couche d'un polymère incompatible avec le PVDF. Ces couches peuvent être des plaques ou des films; elles peuvent être planes ou cylindriques. Ce sont par exemple des tuyaux.

Selon un autre mode de réalisation, le matériau est caractérisé en ce que le polymère incompatible avec le PVDF est du polyamide. Par polyamide, on entend les homo- et co-polyamides, ainsi que leurs alliages et mélanges.

On ne sortirait pas du cadre de l'invention si le matériau comportait d'autres couches. Il est clair que l'on pourrait avoir plusieurs fois le liant de l'invention, c'est-à-dire que l'on aurait dans l'ordre PAlliant selon l'invention/PVDF/liant selon l'invention/PA. Aussi, par exemple, sur la couche de PVDF, on pourrait avoir une couche de polyuréthanne, c'est-à-dire que l'on aurait dans l'ordre PAlliant selon l'invention/PVDF/PU. Encore, par exemple, on pourrait avoir sur la couche de PVDF un autre liant, par exemple celui décrit dans EP 450994 puis une couche d'ABS, c'est-à-dire que l'on aurait dans l'ordre PAlliant selon l'invention/PVDF/liant/ABs.

Ainsi, selon un mode de réalisation, le matériau comprend de plus, du côté du PVDF :
(i) soit une autre couche de liant selon l'invention et un autre polymère incompatible avec le PVDF,
(ii) soit une autre couche de polymère compatible avec le PVDF,
(iii) soit une autre couche d'un autre liant et un autre polymère incompatible avec le PVDF.

Selon un mode de réalisation, le matériau est caractérisé en ce qu'il comprend, dans l'ordre, une couche de polyamide, une couche d'un liant selon l'invention, une couche de PVDF et éventuellement une couche d'un liant selon l'invention ainsi qu'une couche de polyamide.

Selon un mode de réalisation, le matériau comprend une couche de polymère incompatible avec le PVDF, une couche d'un liant selon l'invention formant barrière aux hydrocarbures, une couche de polymère incompatible avec le PVDF.

Selon un autre mode de réalisation, le matériau comprend, dans l'ordre, une couche de polyamide, une couche d'un liant selon l'invention, une couche de polyamide.

Selon encore un autre mode de réalisation, le matériau est caractérisé en ce que l'on ajoute dans les couches de polymère incompatible des matériaux à base de polymère incompatible qui sont broyés et recyclés et/ou que l'on intercale entre le liant et le polymère incompatible une couche faite de matériaux à base de polymère incompatible broyés et recyclés.

Une application particulièrement intéressante des matériaux consiste en la fabrication de tubes et tuyaux, notamment pour l'alimentation en essence qui constituent encore un autre objet de l'invention. Un tube préféré comprend le PVDF disposé à l'intérieur.

Ainsi, selon un mode de réalisation, dans le tube formé d'un matériau selon l'invention, la couche de PVDF est située vers l'intérieur.

En effet, pour des raisons de sécurité et de préservation de l'environnement, les constructeurs automobiles imposent aux tubes d'essence des caractéristiques mécaniques telles que résistance mécanique, flexibilité, et des caractéristiques de résistance accrue à la perméabilité. Les tubes doivent être le moins perméable possible aux produits pétroliers et à leurs additifs, en particulier les alcools comme le méthanol.

Actuellement les tubes de polyamide sont couramment utilisés dans l'industrie automobile. Les polyamides représentent un matériau idéal pour cette application de tube, leur résistance mécanique étant excellente et leur flexibilité étant suffisante pour qu'un tube supporte, sans casser, durant pratiquement toute la vie d'un véhicule, l'accumulation de mouvements de flexion. Cependant, ces tubes en polyamide ne répondent plus aux nouvelles exigences des constructeurs automobiles en ce qui concerne la perméabilité. Avec la présence, de plus en plus développée, de méthanol dans l'essence, la sensibilité des tubes en polyamide se manifeste par un gonflement du tube entraînant une diminution des propriétés mécaniques et des modifications dimensionnelles.

Pour remédier à cet inconvénient, tout en conservant les effets mécaniques des polyamides, des objets de l'invention consiste à gainer la paroi interne du tube de polyamide d'une couche de polyfluorure de vinylidène. La couche de polyfluorure de vinylidène est de préférence la plus fine possible afin de conserver au maximum la flexibilité du polyamide, sachant que le polyfluorure de vinylidène n'est pas connu particulièrement pour ses propriétés en souplesse.

Ainsi, selon un mode de réalisation, l'invention concerne un tube, notamment à essence, comprenant une couche intérieure de PVDF, une couche d'un liant selon l'invention et une couche extérieure de polyamide.

Selon un autre mode de réalisation, l'invention concerne un tube, notamment à essence, comprenant une couche intérieure de polyamide, une couche de liant selon l'invention additionné de PVDF et une couche extérieure de polyamide.

De façon recommandée, les tubes pour l'alimentation en essence des moteurs possédant généralement un diamètre externe de 6 à 12 mm, l'épaisseur de la couche interne de polyfluorure de vinylidène est comprise entre 10 µm et 1 mm et celle du polyamide comprise entre 0,8 et 1,8 mm, une couche intermédiaire de liant d'adhésion entre le polyamide et le polyfluorure de vinylidène de 10 µm à 1 mm complétant le tube. Dans le cas où le liant forme barrière, c'est-à-dire contient du PVDF, les épaisseurs sont sensiblement identiques à celles indiquées ci-avant.

Il est en effet indispensable que le polyfluorure de vinylidène soit lié de façon efficace au polyamide. Un tube qui ne présente pas de liaison entre le polyfluorure de vinylidène et le polyamide ne peut posséder une bonne flexibilité et, par conséquent, ne peut être plié ou coudé facilement par formage à chaud; dans ce cas, le matériau le plus mince forme des plis au cours de l'opération.

Par ailleurs, si les deux couches n'adhèrent pas entre elles, la condensation éventuelle des gaz entre les deux couches peut dans le temps entraîner la déformation de la partie du tube la plus mince. En outre, les tubes étant reliés entre eux, ainsi qu'au réservoir d'essence et au carburateur par des raccords, ceux-ci ne peuvent assurer l'étanchéité s'ils s'appuient sur deux couches dissociées. Enfin, dans le cas où l'épaisseur de la couche de polyfluorure de vinylidène, à l'intérieur du tube, est très mince, par exemple de 10 à quelques dizaines de µm, et sans adhésion, une dépression dans le tube déforme de façon irréversible le film de polyfluorure de vinylidène rendant le tube inutilisable.

Il est constaté qu'un tel tube constitué d'une couche interne de polyfluorure de vinylidène liée par le liant d'adhésion selon l'invention à une couche externe de polyamide, ou alternativement une couche de liant contenant du PVDF entre deux couches de polyamide, permet de diminuer d'au moins un facteur 10 la perméabilité par rapport à celle d'un tube équivalent en polyamide, tout en conservant les autres propriétés, telles que la résistance au choc à froid, dans la limite du cahier des charges des constructeurs.

Selon une autre forme de l'invention, le tube d'essence peut être formé d'une couche centrale de PVDF avec, de chaque côté, une couche du liant de l'invention et une couche de polyamide, c'est-à-dire que le tube possède 5 couches: PAlliant selon l'invention/PVDF/liant selon l'invention/PA.

On ne sortirait pas du cadre de l'invention si, comme précédemment, la (ou les) couche(s) de polyamide comprenaient des rebroyés, c'est-à-dire des lots de tubes à base de polyamide qui sont broyés et mélangés au polyamide. On peut aussi mettre ces rebroyés en couche entre le liant et le PA. De préférence, pour les tubes à essence, le liant selon l'invention est mélangé avec du PVDF et éventuellement du PVDF modifié par un élastomère ou plastifié, et éventuellement un élastomère compatible avec A, comme cité précédemment, pour le rendre moins rigide.

Les tubes d'essence ainsi fabriqués possèdent une résistance exceptionnelle aux alcools, aux essences alcoolisées et à la chaleur.

La présente invention vise donc aussi particulièrement les tubes comprenant un matériau selon l'invention pour l'alimentation en essence. Cependant, d'autres applications sont aussi envisagées par la présente invention, comme la fabrication de cuves plastiques pour le stockage d'hydrocarbures, en particulier d'essence. Le terme "essence" utilisé dans la présente invention vise tous les types d'essences, pour l'alimentation de tous types de moteurs, turbines et autres.

Bien entendu, la présente invention n'est pas limitée aux modes de réalisation décrits et représentés mais elle est susceptible de nombreuses variantes accessibles à l'homme de l'art.

## Revendications

1. Utilisation d'un polymère A contenant des motifs 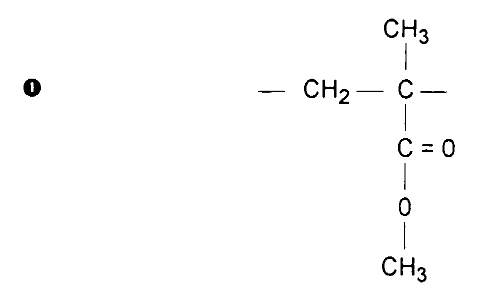 et des motifs 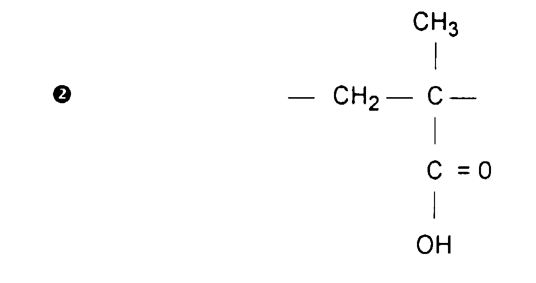 sous forme acide, ou ses dérivés anhydrides ou des mélanges de ceux-ci et ne contenant pas de motif imide, comme liant d'adhésion permettant de faire adhérer du PVDF aux polymères qui lui sont incompatibles.

2. Utilisation d'un polymère A selon la revendication 1, caractérisée en ce que le polymère A comprend, en moles, jusqu'à 30 % de motifs 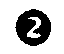 , sous forme acide, ou son dérivé anhydride ou leurs mélanges.

3. Utilisation d'un polymère A selon la revendication 1 ou 2, caractérisée en ce que le polymère A comprend, en moles, jusqu'à 15 % de motifs 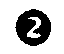 sous forme acide, ou son dérivé anhydride ou leurs mélanges.

4. Utilisation d'un polymère A selon l'une des revendications 1 à 3, caractérisée en ce que le polymère A contient principalement le motif 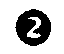 sous forme acide.

5. Utilisation d'un polymère A selon l'une des revendications 1 à 4, caractérisée en ce que le polymère A comprend un additif ou polymère modifiant sa rigidité, ou plastifiant compatible avec le polymère A.

6. Utilisation d'un polymère A selon la revendication 5, caractérisée en ce que le polymère A comprend du PVDF, modifié ou non, représentant en % en poids du liant, au moins 30 % de préférence au moins 65 %.

7. Utilisation d'un polymère A selon la revendication 6, caractérisée en ce que le polymère A comprend du PVDF, modifié ou non, représentant en % en poids du liant, au moins 65 %, de préférence au moins 80 %.

8. Matériau comprenant, dans l'ordre, une couche de PVDF, une couche de liant défini dans l'une quelconque des revendications d'utilisation 1 à 7, une couche d'un polymère incompatible avec le PVDF.

9. Matériau selon la revendication 8, caractérisé en ce que le matériau incompatible avec le PVDF est du polyamide.

10. Matériau selon la revendication 8 ou 9, caractérisé en ce qu'il comprend de plus, du côté PVDF :
(i) soit une autre couche de liant défini dans l'une quelconque des revendications d'utilisation 1 à 7, et un autre polymère incompatible avec le PVDF,
(ii) soit une autre couche de polymère compatible avec le PVDF,
(iii) soit une autre couche d'un autre liant et un autre polymère incompatible avec le PVDF.

11. Matériau selon la revendication 8, caractérisé en ce qu'il comprend, dans l'ordre, une couche de polyamide, une couche d'un liant défini dans l'une quelconque des revendications d'utilisation 1 à 7, une couche de PVDF et éventuellement une couche d'un liant défini dans l'une quelconque des revendications 1 à 7, ainsi qu'une couche de polyamide.

12. Matériau comprenant, dans l'ordre, une couche de polymère incompatible avec le PVDF, une couche de liant défini dans la revendication 7, une couche de polymère incompatible avec le PVDF.

13. Matériau selon la revendication 12, caractérisé en ce qu'il comprend, dans l'ordre, une couche de polyamide, une couche de liant défini dans la revendication 7, une couche de polyamide.

14. Matériau selon l'une des revendications 8 à 13, caractérisé en ce que les couches de polymère incompatible comportent des matériaux à base de polymère incompatible qui ont été broyés et recyclés et/ou comportent une couche, faite de matériaux à base de polymère incompatible broyés et recyclés, intercalée entre la couche de liant et le polymère incompatible.

15. Tube formé d'un matériau selon l'une des revendications 8 à 14, caractérisé en ce qu'il comprend une couche de PVDF située vers l'intérieur du tube.

16. Tube selon la revendication 15, caractérisé en ce qu'il comprend une couche intérieure de PVDF, une couche de liant tel que défini dans l'une quelconque des revendications d'utilisation 1 à 7, et une couche extérieure de polyamide.

17. Tube selon la revendication 15, caractérisé en ce qu'il comprend une couche intérieure de polyamide, une couche de liant tel que défini dans la revendication 7, et une couche extérieure de polyamide.

18. Utilisation d'un tube selon l'une des revendications 15 à 17, pour l'alimentation des moteurs en essence.

## Patentansprüche

1. Verwendung eines Polymeren A, enthaltend Gruppen 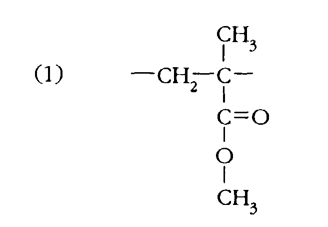 und Gruppen 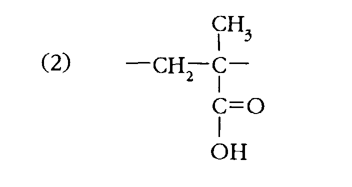 als Säure, deren Anhydride oder deren Mischungen und keine Imid-Gruppen als Klebstoff, um PVDF damit nicht kompatiblen Polymeren zu verkleben.

2. Verwendung eines Polymeren A nach Anspruch 1, dadurch gekennzeichnet, daß das Polymere A bis zu 30 Mol-% der Gruppen (2) als Säure Anhydrid oder deren Mischungen aufweist.

3. Verwendung eines Polymeren A nach Anspruch 1 oder 2, dadurch gekennzeichnet, daß das Polymere A bis zu 15 Mol-% der Gruppen (2) als Säure Anhydrid oder deren Mischungen aufweist.

4. Verwendung eines Polymeren A nach einem der Ansprüche 1 bis 3, dadurch gekennzeichnet, daß das Polymere A im wesentlichen die Gruppe (2) als Säure aufweist.

5. Verwendung eines Polymeren A nach einem der Ansprüche 1 bis 4, dadurch gekennzeichnet, daß das Polymere A ein Additiv oder ein Polymer zur Veränderung seiner Starrheit oder ein mit Polymer A kompatiblen Weichmacher aufweist.

6. Verwendung eines Polymeren A nach Anspruch 5, dadurch gekennzeichnet, daß das Polymere A ein gegebenenfalls modifiziertes PVDF enthält, das mindestens 30 Gew.-% des Bindemittels, vorzugsweise mindestens 65 Gew-%, ausmacht.

7. Verwendung eines Polymeren A nach Anspruch 6, dadurch gekennzeichnet, daß das Polymere A ein gegebenenfalls modifiziertes PVDF enthält, das mindestens 65 Gew.-% des Bindemittels, vorzugsweise mindestens 80 Gew.-%, ausmacht.

8. Material enthaltend, in der Reihenfolge, eine Schicht PVDF, eine Schicht des in einem der Verwendungsansprüche 1 bis 7 definierten Bindemittels und eine Schicht eines mit PVDF inkompatiblen Polymeren.

9. Material nach Anspruch 8, dadurch gekennzeichnet, daß das mit PVDF inkompatible Material ein Polyamid ist.

10. Material nach Anspruch 8 oder 9, dadurch gekennzeichnet, daß es außerdem auf der PVDF-Seite:
(i) entweder eine Schicht des in einem der Verwendungsansprüche 1 bis 7 definierten Bindemittels und ein weiteres mit PVDF inkompatibles Polymeres,
(ii) oder eine weitere Schicht eines mit PVDF kompatiblen Polymers,
(iii) oder eine weitere Schicht eines anderen Bindemittels und ein weiteres mit PVDF inkompatibles Polymer
aufweist.

11. Material nach Anspruch 8, dadurch gekennzeichnet, daß es in der Reihenfolge eine Polyamidschicht, eine Schicht des nach einem der Verwendungsansprüche 1 bis 7 definierten Bindemittels, eine Schicht PVDF und gegebenenfalls eine Schicht des nach einem der Ansprüche 1 bis 7 definierten Bindemittels sowie eine Polyamidschicht aufweist.

12. Material enthaltend in der Reihenfolge eine mit PVDF nicht kompatible Polymerschicht, eine nach Anspruch 7 definierte Schicht eines Bindemittels und eine Schicht eines mit PVDF inkompatiblen Polymeren aufweist.

13. Material nach Anspruch 12, dadurch gekennzeichnet, daß es in der Reihenfolge eine Polyamidschicht, eine nach Anspruch 7 definierte Schicht eines Bindemittels und eine Polyamidschicht aufweist.

14. Material nach einem der Ansprüche 8 bis 13, dadurch gekennzeichnet, daß die Schichten des inkompatiblen Polymeren Materialien auf der Grundlage von zermahlenen und wiederverwerteten nicht kompatiblen Polymeren und/oder eine aus zermahlenen und wiederverwerteten Materialien auf der Grundlage von nicht kompatiblen Polymeren hergestellte Schicht aufweisen, die zwischen der Bindemittelschicht und dem nicht kompatiblen Polymeren angeordnet ist.

15. Rohr geformt aus einem Material nach einem der Ansprüche 8 bis 14, dadurch gekennzeichnet, daß es eine auf der Innenseite des Rohrs angeordnete PVDF-Schicht aufweist.

16. Rohr nach Anspruch 15, dadurch gekennzeichnet, daß es eine innere PVDF-Schicht des in einem der Verwendungsansprüche 1 bis 7 definierten Bindemittels und eine äußere Polyamidschicht aufweist.

17. Rohr nach Anspruch 15, dadurch gekennzeichnet, daß es eine innere Polyamidschicht, eine nach Anspruch 7 definierte Schicht eines Bindemittels und eine äußere Polyamidschicht aufweist.

18. Verwendung eines Rohres nach einem der Ansprüche 15 bis 17 zur Versorgung von Motoren mit Kraftstoff.

## Claims

1. Use of a polymer A containing units 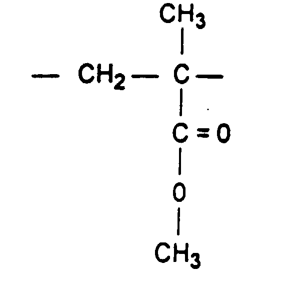 and units 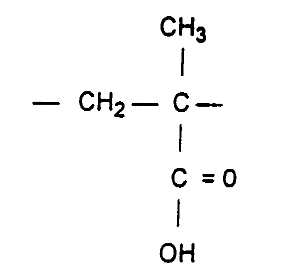 in acid form, or its anhydride derivatives or mixtures thereof and containing no imide units, as an adhesion binder enabling PVDF to adhere to polymers which are incompatible with it.

2. Use of a polymer A according to Claim 1, characterized in that the polymer A includes, on a molar basis, up to 30 % of unit (2), in acidic form, or its anhydride derivative or their mixtures.

3. Use of a polymer A according to Claim 1 or 2, characterized in that the polymer A includes, on a molar basis, up to 15 % of unit (2), in acidic form, or its anhydride derivative or their mixtures.

4. Use of a polymer A according to any one of Claims 1 to 3, characterized in that the polymer A contains chiefly the unit (2) in acidic form.

5. Use of a polymer A according to any one of Claims 1 to 4, characterized in that it includes an additive or polymer modifying its rigidity or plasticizing, compatible with the polymer A.

6. Use of a polymer A according to Claim 5, characterized in that the polymer A includes PVDF, modified or otherwise, representing at least 30 %, preferably at least 65 %, as % by weight of the bonding agent.

7. Use of a polymer A according to Claim 6, characterized in that the polymer A includes PVDF, modified or otherwise, representing at least 65 %, preferably at least 80 %, as % by weight of the bonding agent.

8. Material including, in this order, a layer of PVDF, a layer of the bonding agent defined in any one of the use Claims 1 to 7, and a layer of a polymer incompatible with PVDF.

9. Material according to Claim 8, characterized in that the material incompatible with PVDF is polyamide.

10. Material according to Claim 8 or 9, characterized in that it additionally includes, on the PVDF side:
(i) either another layer of bonding agent defined in any one of the use Claims 1 to 7 and another polymer incompatible with PVDF,
(ii) or another layer of polymer compatible with PVDF,
(iii) or another layer of another bonding agent and another polymer incompatible with PVDF.

11. Material according to Claim 8, characterized in that it includes, in this order, a layer of polyamide, a layer of a bonding agent defined in any one of the use Claims 1 to 7, a layer of PVDF and optionally a layer of a bonding agent according to any one of Claims 1 to 7, as well as a layer of polyamide.

12. Material including, in this order, a layer of polymer incompatible with PVDF, a layer of bonding agent defined in Claim 7, and a layer of polymer incompatible with PVDF.

13. Material according to Claim 12, characterized in that it includes, in this order, a layer of polyamide, a layer of bonding agent defined in Claim 7 and a layer of polyamide.

14. Material according to one of Claims 8 to 13, characterized in that the layers of incompatible polymer comprise materials based on incompatible polymer which have been ground and recycled and/or comprise a layer, made of ground and recycled materials based on incompatible polymer, intercalated between the layer of bonding agent and the incompatible polymer.

15. Pipe made of a material according to one of Claims 8 to 14, characterized in that it includes a layer of PVDF which is situated towards the inside of the pipe.

16. Pipe according to Claim 15, characterized in that it includes an inner layer of PVDF, a layer of bonding agent as defined in any one of the use Claims 1 to 7 and an outer layer of polyamide.

17. Use of a pipe according to Claim 15, characterized in that it includes an inner layer of polyamide, a layer of bonding agent as defined in Claim 7 and an outer layer of polyamide.

18. Use of a pipe according to one of Claims 15 to 17, for feeding engines with petrol.
